# EUROPÄISCHE PATENTSCHRIFT

(11) **EP 1 653 785 B1**
(45) Veröffentlichungstag und Bekanntmachung des Hinweises auf die Patenterteilung: **29.07.2009**
(21) Anmeldenummer: 05022448.4
(22) Anmeldetag: 14.10.2005
(51) Int. Cl.: H05B 41/04

(54) **Zündvorrichtung für eine Hochdruckentladungslampe und Hochdruckentladungslampe mit Zündvorrichtung sowie Betriebsverfahren für eine Hochdruckentladungslampe**
Igniter for a high pressure discharge lamp and a high pressure discharge lamp with a igniter also the operation for a high pressure discharge lamp.
Dispositif d'allumage pour une lampe a decharge haute pression et une lampe a décharge haute pression avec un dispositif d'allumage et méthode d'opération.

(30) Priorität: 27.10.2004 DE 102004052299
(43) Veröffentlichungstag der Anmeldung: 03.05.2006
(73) Patentinhaber: Osram Gesellschaft mit beschränkter Haftung, 81543 München (DE)
(72) Erfinder: Hirschmann, Günther, 81735 München (DE); Siessegger, Bernhard, 81539 München (DE)
(74) Vertreter: Raiser, Franz

(56) Entgegenhaltungen:
- EP-A- 0 868 833
- EP-A- 1 241 925
- EP-A- 1 345 478
- US-A- 6 104 141

## Beschreibung

Die Erfindung betrifft ein Betriebsverfahren für eine Hochdruckentladungslampe gemäß dem Oberbegriff des Patentanspruchs 1.

### I. Stand der Technik

Die EP-A 0 294 604 beschreibt eine Schaltungsanordnung zum Betreiben einer Fahrzeugscheinwerfer-Hochdruckentladungslampe mit einer sinusförmigen Wechselspannung. Die Schaltungsanordnung umfasst einen Serienresonanzkreis, der zum Zünden der Gasentladung in der Hochdruckentladungslampe am Resonanzkondensator mittels der Methode der Resonanzüberhöhung eine sinusförmige Wechselspannung mit einer Frequenz von 45 Kilohertz und einer Amplitude von bis zu 18000 Volt generiert, welche die Lampe innerhalb einer Zeitspanne von 6 Millisekunden zündet.

Die Offenlegungsschrift EP 1 345 478 A2 offenbart eine Schaltungsanordnung zum Zünden von Hochdruckentladungslampen mittels Resonanzzündung durch einen Serienresonanzkreis, dessen Induktivität von der Primärwicklung eines Zündtransformators gebildet wird.

### II. Darstellung der Erfindung

Es ist Aufgabe der Erfindung, ein Betriebsverfahren für eine mit einer Zündhilfselektrode versehene Hochdruckentladungslampe bereitzustellen, das für den Betrieb der Hochdruckentladungslampe mit einem hochfrequenten Wechselstrom geeignet ist.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die Zündvorrichtung für eine mit einer Zündhilfselektrode versehene Hochdruckentladungslampe weist einen Serienresonanzkreis zum Erzeugen der Zündspannung für die Hochdruckentladungslampe auf, dessen Resonanzinduktivität die Primärwicklung eines Transformators umfasst, wobei die Sekundärwicklung dieses Transformators zum Beaufschlagen der Zündhilfselektrode der Hochdruckentladungslampe mit der Zündspannung vorgesehen ist. Dadurch kann für Wechselspannungen hoher Frequenzen, insbesondere für Frequenzen im Megahertzbereich, in der Primärwicklung des Transformators während der Zündphase der Hochdruckentladungslampe auf einfache Weise eine im Vergleich zur Versorgungsspannung der Zündvorrichtung resonanzüberhöhte Spannung generiert werden, die mittels der Sekundärwicklung des Transformators in die erforderliche Zündspannung der Lampe hochtransformiert und der Zündhilfselektrode der Hochdruckentladungslampe zugeführt wird. Zum Deaktivieren der Zündvorrichtung nach erfolgreicher Zündung der Gasentladung in der Hochdruckenttadungslampe genügt es, die Frequenz der Versorgungsspannung für die Zündvorrichtung und die Hochdruckentladungslampe derart zu ändern, dass ein ausreichender Frequenzabstand zu der Resonanzfrequenz des vorgenannten Serienresonanzkreises besteht. Dementsprechend besitzt die Zündvorrichtung einen einfachen Aufbau. Ferner wird die Sekundärwicklung des Transformators während des Lampenbetriebs nicht von dem hochfrequenten Lampenstrom durchflossen, so dass keine nennenswerten Leistungsverluste in der Sekundärwicklung auftreten können. Außerdem ermöglicht die Zündvorrichtung eine vollständige galvanische Trennung zwischen der Zündvorrichtung und ihrer Spannungsversorgungsschaltung bzw. der Betriebsschaltung der Hochdruckentladungslampe.

Um die vorgenannte galvanische Trennung herbeizuführen, wird die Resonanzkapazität des Serienresonanzkreises vorteilhafter Weise von mindestens zwei Kondensatoren gebildet, die derart geschaltet sind, dass sie einen Gleichstromfluss zwischen der Spannungsversorgungsschaltung und den Komponenten der Zündvorrichtung verhindern.

Vorteilhafterweise ist gemäß einiger bevorzugter Ausführungsbeispiele der Erfindung auch ein Gleichspannungstrennkondensator vorgesehen. um den Natriumverlust im Entladungsplasma bedingt durch die Diffusion von Natriumionen zur Entladungsgefäßwand zu reduzieren. Die Kapazität des Gleichspannungstrennkondensators wird dabei so dimensioniert, dass einerseits die Zündhilfselektrode mit einer ausreichend hohen Spannung zum Zünden der Gasentladung beaufschlagt wird und andererseits die vorgenannte Natriumdiffusion in hinreichendem Maß reduziert wird. Bei zu großer Kapazität oder zu hohem Leckstrom des Gleichspannungstrennkondensators wird keine ausreichende Reduktion der Natriumdiffusion erreicht und bei zu kleiner Kapazität kann die Zündhilfselektrode nicht mit ausreichend hoher Spannung zum Zünden der Gasentladung beaufschlagt werden.

Der Transformator der Zündvorrichtung ist vorteilhafter Weise als Spartransformator ausgebildet, das heißt, der Transformator besitzt nur eine einzige Wicklung mit einem ersten Wicklungsabschnitt, der als Primärwicklung ausgebildet ist, und einem zweiten Wicklungsabschnitt, der als Sekundärwicklung ausgebildet ist, wobei ein Anschluss dieser Wicklungsabschnitte als gemeinsamer Anschluss ausgebildet ist. Dadurch kann eine platzsparende Anordnung des Transformators und der Zündvorrichtung gewährleistet werden, so class die komplette Zündvorrichtung in den Lampensockel der Hochdruckentladungslampe integrierbar ist. Außerdem ist die Wicklung bzw. sind die Wicklungen des Transformators der erfindungsgemäßen Zündvorrichtung vorzugsweise als gerichtete Lagenwicklung bzw. Lagenwicklungen in Kammer- oder Kreuzwicklung ausgebildet, um eine möglichst hohe Eigenresonanzfrequenz des Transformators zu gewährleisten.

Das erfindungsgemäße Betriebsverfahren für eine Hochdruckentladungslampe zeichnet sich dadurch aus, Class eine resonanzüberhöhte Wechselspannung zum Zünden der Gasentladung in dem Entladungsgefaß der Hochdruckentladungslampe bereitgestellt wird, wobei die resonanzüberhöhte Wechselspannung mit Hilfe eines Transformators generiert wird und in eine höhere Spannung transformiert wird, die einer Zündhilfselektrode der Hochdruckentladungslampe zugeführt wird. Dadurch kann mit wesentlich geringerem Aufwand die erforderliche Zündspannung für die Hochdruckentladungslampe erzeugt werden, weil im Unterschied zum Stand der Technik nun die durch die Methode der Resonanzüberhöhung bereitzustellende Spannung nur noch ein Bruchteil der erforderlichen Hochspannung an der Zündhilfselektrode ist. Vorzugsweise wird die resonanzüberhöhte Wechselspannung mittels der Primärwicklung des Transformators generiert, die als Bestandteil eines Serienresonanzkreises ausgebildet ist, und die der Zündhilfselektrode zugeführte höhere Spannung wird mit Hilfe der Sekundärwicklung des Transformators erzeugt. Außerdem wird zum Bereitstellen der resonanzüberhöhten Wechselspannung vorzugsweise eine Frequenzmodulation der von der Spannungsquelle generierten Versorgungsspannung durchgeführt, um Änderungen der Resonanzfrequenz des oben genannten Serienresonanzkreises bedingt durch Bauteiletoleranzen, Temperaturschwankungen und Alterung der Bauteile zu berücksichtigen.

Nach erfolgter Zündung der Gasentladung in der Hochdruckentladungslampe wird erfindungsgemäß eine in Serie zur Entladungsstrecke der Hochdruckentladungslampe geschaltete Impedanz, beispielsweise die Primärwicklung des vorgenannten Transformators, zur Stabilisierung der Gasentladung verwendet. Der vorgenannte Serienresonanzkreis kann nach erfolgter Zündung der Gasentladung in der Hochdruckentladungslampe vorteilhafter Weise auch benutzt werden, um durch Änderung der Frequenz der Versorgungsspannung der Hochdruckentladungslampe ihre elektrische Leistungsaufnahme auf den gewünschten Wert einzustellen.

### III. Beschreibung der bevorzugten Ausführungsbeispiele

Nachstehend wird die Erfindung anhand mehrerer bevorzugter Ausführungsbeispiele näher erläutert. Es zeigen:
- Figur 1: Eine Schaltskizze eines ersten Ausführungsbeispiels der Zündvorrichtung
- Figur 2: Eine Schaltskizze eines zweiten Ausführungsbeispiels der Zündvorrichtung
- Figur 3: Eine Schaltskizze eines dritten Ausführungsbeispiels der Zündvorrichtung
- Figur 4: Eine Schaltskizze eines vierten Ausführungsbeispiels der Zündvorrichtung
- Figur 5: Eine Schaltskizze eines fünften Ausführungsbeispiels der Zündvorrichtung
- Figur 6: Eine Schaltskizze eines fünften Ausführungsbeispiels der Zündvorrichtung mit einer Zuordnung der Komponenten zum Lampensockel
- Figur 7: Eine Schaltskizze eines sechsten Ausführungsbeispiels der Zündvorrichtung
- Figur 8: Eine Schaltskizze eines ersten Ausführungsbeispiels der Zündvorrichtung mit einer Zündhilfselektrode gemäß einer ersten Ausführungsform
- Figur 9: Eine Schaltskizze eines ersten Ausführungsbeispiels der Zündvorrichtung mit einer Zündhilfselektrode gemäß einer zweiten Ausführungsform

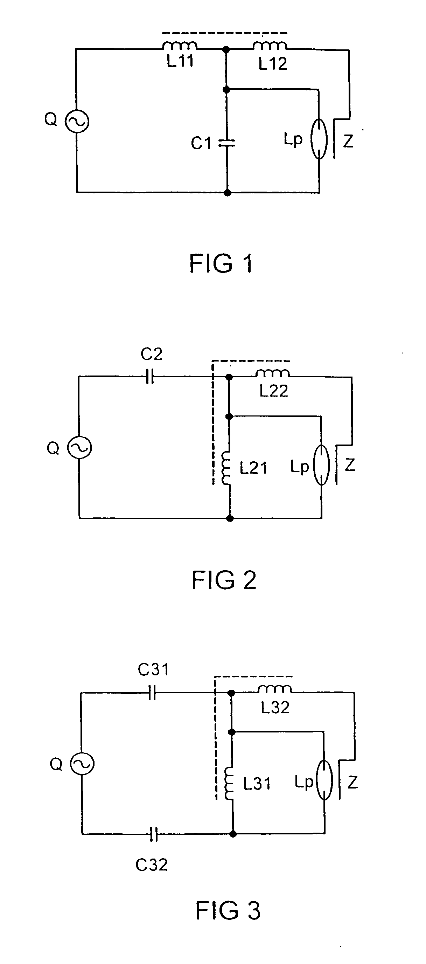

Die in den Figuren 1 bis 9 schematisch dargestellten Zündvorrichtungen dienen zum Beaufschlagen der Zündhilfselektrode Z bzw. Z' der Hochdruckendadungslampe Lp mit der dafür erforderlichen Zündspannung. Die Zündvorrichtungen werden jeweils von einer Wechselspannungsquelle Q bzw. Q' gespeist, die beispielsweise eine sinusförmige oder rechteckförmige Versorgungsspannung bzw. einen sinusförmigen oder rechteckförmigen Versorgungsstrom generiert.

Das in Figur 1 schematisch dargestellte Ausführungsbeispiel der Zündvorrichtung besteht aus einem Spartransformator L11, L12 und einem Kondensator C1. Der Spartransformator besitzt eine Wicklung mit einem ersten Wicklungsabschnitt L11, der als Primärwicklung ausgebildet ist, und mit einem zweiten Wicklungsabschnitt L12, der als Sekundärwicklung des Transformators ausgebildet ist. Der Kondensator C1 und der Primärwicklungsabschnitt L11 sind als Serienresonanzkreis geschaltet, der an die Wechselspannungsquelle Q angeschlossen ist. Die Resonanzfrequenz des Serienresonanzkreises wird vorzugsweise oberhalb 300 kHz, insbesondere oberhalb von 1 MHz gewählt, was in einer kleinen Baugröße und einer besonders geringen erforderlichen Spannung an der Zündhilfselektrode resultiert. Die Frequenz der Versorgungsspannung bzw. des Versorgungsstroms wird während der Zündphase nahe der Resonanzfrequenz des Serienresonanzkreises gewählt bzw. derart gewählt, dass eine Oberschwingung des Versorgungssignals zu einer Anregung des Serienresonanzkreises während der Zündphase führt.

Der Mittenabgriff zwischen den beiden Wicklungsabschnitten L11, L12, der als gemeinsamer erster Anschluss der Wicklungsabschnitte L11, L12 ausgebildet ist, ist sowohl mit der ersten Elektrode der Hochdruckentladungslampe Lp als auch mit einem Anschluss des Kondensators C1 verbunden. Der zweite Anschluss des Primärwicklungsabschnitts L11 ist mit der Wechselspannungsquelle Q verbunden, während der zweite Anschluss des Sekundärwicklungsabschnitts L12 mit der Zündhilfselektrode Z der Hochdruckentladungslampe Lp verbunden ist. Der Kondensator C1 ist parallel zur Entladungsstrecke der Lampe Lp geschaltet. Bei der Lampe Lp handelt es sich beispielsweise um eine quecksilberfreie Halogen-Metalldampf-Hochdruckentladungslampe, die als Lichtquelle in einem Fahrzeugscheinwerfer vorgesehen ist. Das Entladwigsgefäß dieser Hochdruckentladungslampe Lp besteht entweder aus einer lichtdurchlässigen Keramik, beispielsweise aus Aluminiumoxidkeramik, oder aus Quarzglas. Die Zündhilfselektrode Z ist beispielsweise als elektrisch leitfähige Beschichtung auf der Außenseite des Entladungsgefäßes aufgebracht oder als Draht ausgebildet, so dass eine kapazitive Kopplung zwischen der Zündhilfselektrode Z und mindestens einer der beiden innerhalb des Entladungsgefäßes angeordneten Elektroden der Hochdruckentladungslampe Lp besteht. Der Resonanzkondensator C1 besitzt eine Kapazität von 94 pF (bei einer Frequenz von 1 kHz gemessen). Der Primärwicklungsabschnitt L11 besitzt 70 Windungen und eine Induktivität von 100 µH (bei einer Frequenz von 1 kHz gemessen). Der Sekundärwicklungsabschnitt L12 besitzt 95 Windungen.

Zum Betreiben der vorgenannten Hochdruckentladungslampe mit keramischen Entladungsgefäß wird eine Wechselspannungsquelle Q verwendet, die eine nahezu sinusförmige Wechselspannung mit einem Effektivwert von 90 V und einer Frequenz von 1,248 MHz besitzt, die der empirisch ermittelten Resonanzfrequenz des aus den verwendeten Bauelementen gebildeten Resonanzkreises entspricht. Bei der Wechselspannungsquelle Q handelt es sich um einen Spannungswandler, beispielsweise einen Gegentaktwandler, der aus der Bordnetzspannung des Kraftfahrzeugs die gewünschte Wechselspannung generiert. Zum Zünden der Gasentladung in der Hochdruckentladungslampe Lp wird die Frequenz der von der Wechselspannungsquelle Q bereitgestellten Wechselspannung auf die Resonanzfrequenz des Serienresonanzkreises C1, L11 abgestimmt, so dass sich an den Bauteilen C1 und L11 eine resonanzüberhöhte Wechselspannung mit einem Spitzenwert von mehr als 1000 Volt aufbaut. Diese Spannung liegt auch an der Entladungsstrecke zwischen den beiden Elektroden der Hochdruckgasentladungslampe Lp an, da der Resonanzkondensator C1 parallel zur Entladungsstrecke der Lampe Lp geschaltet ist. Mittels des Sekundärwicklungsabschnitts L12 wird die resonanzüberhöhte Wechselspannung auf einen Spitzenwert von 2500 Volt hochtransformiert und der Zündhilfselektrode Z zugeführt. Zwischen der Zündhilfselektrode Z und der mit der Wechselspannungsquelle Q und einem Anschluss des Resonanzkondensators C1 verbundenen Elektrode der Hochdruckentladungslampe Lp besteht daher eine Spannungsdifferenz von 2500 Volt, die zum Zünden der Gasentladung in der Lampe Lp ausreicht. Nach erfolgter Zündung der Gasentladung in der Hochdruckentladungslampe Lp wird die Zündvorrichtung automatisch deaktiviert, da die Hochdruckentladungslampe dann den Resonanzkreis stark bedämpft. Die Frequenz der von der Wechselspannungsquelle Q generierten Wechselspannung wird so weit erhöht, dass sich die gewünschte Lampenleistung einstellt. Während des Betriebs der Hochdruckentladungslampe Lp wird der Primärwicklungsabschnitt L11 zur Stabilisierung der Entladung, das heißt, zur Begrenzung des Lampenstroms, benutzt.

Zum Betreiben der oben genannten Hochdruckentladungslampe Lp mit einem Entladungsgefäß aus Quarzglas wird eine Wechselspannungsquelle Q verwendet, die eine nahezu sinusförmige Wechselspannung mit einem Effektivwert von 195 V und einer Frequenz von 1,234 MHz besitzt. Zum Zünden der Gasentladung in der Hochdruckentladungslampe Lp wird die Frequenz der von der Wechselspannungsquelle Q bereitgestellten Wechselspannung auf die Resonanzfrequenz des Serienresonanzkreises C1, L11 abgestimmt, so dass sich an den Bauteilen C1 und L11 eine resonanzüberhöhte Wechselspannung mit einem Spitzenwert von 1500 Volt aufbaut. Diese Spannung liegt auch an der Entladungsstrecke zwischen den beiden Elektroden der Hochdruckgasentladungslampe Lp an, da der Resonanzkondensator C1 parallel zur Entladungsstrecke der Lampe Lp geschaltet ist. Mittels des Sekundärmicklungsabschnitts L12 wird der Zündhilfselektrode Z eine Wechselspannung mit einem Spitzenwert von 4000 Volt zugeführt. Zwischen der Zündhilfselektrode Z und der mit der Wechselspannungsquelle Q und einem Anschluss des Resonanzkondensators C1 verbundenen Elektrode der Hochdruckentladungslampe Lp besteht daher eine Spannungsdifferenz von 4000 Volt, die zusammen mit der Spannungsdifferenz zwischen den Elektroden zum Zünden der Gasentladung in der Lampe Lp ausreicht. Nach erfolgter Zündung der Gasentladung in der Hochdruckentladungsiampe Lp wird die Zündvorrichtung automatisch deaktiviert, da die Hochdruckentladungslampe dann den Resonanzkreis stark bedämpft. Die Frequenz der von der Wechselspannungsquelle Q generierten Wechselspannung wird so weit erhöht, dass sich die gewünschte Lampenleistung einstellt. Während des Betriebs der Hochdruckentladungslampe Lp wird der Primärwicklungsabschnitt L11 zur Stabilisierung der Entladung, das heißt, zur Begrenzung des Lampenstroms, benutzt.

Um zu gewährleisten, dass die Frequenz der von der Wechselspannungsquelle generierten Wechselspannung während der Zündphase ausreichend nahe bei der Resonanzfrequenz des wegen seiner hohen Güte sehr schmalbandigen Serienresonanzkreises liegt, kann während der Zündphase eine Frequenzmodulation der Wechselspannung durchgeführt werden. Hierfür eignen sich beispielsweise bei einer Mittenfrequenz von 1,23 MHz ein Frequenzhub von 50 kHz und ein sinusförmiges Modulationssignal mit 500 Hz.

Bei dem in Figur 2 abgebildeten zweiten Ausführungsbeispiel der Zündvorrichtung besteht die Zündvorrichtung aus einem Spartransformator L21, L22 und einem Kondensator C2. Der Spartransformator besitzt eine Wicklung mit einem ersten Wicklungsabschnitt L21, der als Primärwicklung ausgebildet ist, und mit einem zweiten Wicklungsabschnitt L22, der als Sekundärwicklung des Transformators ausgebildet ist. Der Kondensator C2 und der Primärwicklungsabschnitt L21 sind als Serienresonanzkreis geschaltet, der an die Wechselspannungsquelle Q angeschlossen ist. Der Mittenabgriff zwischen den beiden Wicklungsabschnitten L21, L22, der als gemeinsamer erster Anschluss der Wicklungsabschnitte L21, L22 ausgebildet ist, ist sowohl mit der ersten Elektrode der Hochdruckentladungslampe Lp als auch mit einem Anschluss des Kondensators C2 verbunden. Der zweite Anschluss des Primärwicklungsabschnitts L21 ist mit der Wechselspannungsquelle Q und mit der zweiten Elektrode der Hochdruckentladungslampe verbunden, während der zweite Anschluss des Sekundärwicklungsabschnitts L22 mit der Zündhilfselektrode Z der Hochdruckentladungslampe Lp verbunden ist. Im Unterschied zu dem ersten Ausführungsbeispiel (Figur 1) ist bei dem zweiten Ausführungsbeispiel der Primärwicklungsabschnitt L21 und nicht der Resonanzkondensator C2 parallel zur Entladungsstrecke der Hochdruckentladungslampe Lp geschaltet. Die Wicklungsabschnitte L21, L22 und der Resonanzkondensator C2 besitzen die gleiche Dimensionierung wie die entsprechenden Komponenten L11, L12 und C1 des ersten Ausführungsbeispiels. Die Wechselspannungsquelle Q und die Lampe Lp stimmen ebenfalls mit dem ersten Ausführungsbeispiel überein. Der Kondensator C2 verhindert auch einen Gleichstromfluss durch die Lampe Lp. Der Resonanzkondensator C2 besitzt eine Kapazität von 94 pF. Der Primärwicklungsabschnitt L21 besitzt 70 Windungen und eine Induktivität von 100 µH. Der Sekundärwicklungsabschnitt L22 besitzt 95 Windungen.

Zum Zünden der Gasentladung in der Lampe Lp wird die Frequenz der von der Wechselspannungsquelle Q generierten Wechselspannung linear von 1,2 MHz bis 1,3 MHz innerhalb von 1 Millisekunde erhöht und anschließend wieder innerhalb derselben Zeitspanne auf 1,2 MHz reduziert, um zu gewährleisten, dass die in diesem Frequenzbereich liegende Resonanzfrequenz des Serienresonanzkreises C2, L21 ausreichend gut getroffen wird. Diese Prozedur wird solange wiederholt, bis die Gasentladung in der Lampe Lp gezündet hat oder eine vorgegebene maximale Zeitspanne, beispielsweise 100 ms, überschritten ist und die Wechselspannungsquelle Q abgeschaltet wird. Nach der Zündung der Gasentladung in der Lampe Lp wird die Frequenz der Wechselspannung erhöht bis sich die gewünschte Lampenleistung einstellt.

In Figur.3 ist ein drittes Ausführungsbeispiel der Zündvorrichtung dargestellt. Das dritte Ausführungsbeispiel stimmt weitgehend mit der Zündvorrichtung gemäß dem zweiten Ausführungsbeispiel überein. Im Unterschied zum zweiten Ausführungsbeispiel wird beim dritten Ausführungsbeispiel der Zündvorrichtung die Resonanzkapazität des Serienresonanzkreises der Zündvorrichtung von zwei Kondensatoren C31 und C32 gebildet. Die beiden Resonanzkondensatoren C31, C32 sind derart geschaltet, dass eine vollständige Potentialtrennung zwischen der Wechselspannungsquelle Q und den Komponenten der Zündvorrichtung sowie der Lampe Lp gewährleistet ist. Der Kondensator C31 besitzt eine Kapazität von 235 pF und der Kondensator C32 weist eine Kapazität von 157 pF auf. Die Dimensionierung und Anordnung der Bauteile L31, L32, Q, Lp und Z stimmt mit der Dimensionierung und Anordnung der Bauteile L21, L22, Q, Lp und Z des zweiten Ausführungsbeispiels (siehe Figur 2) überein. Die Betriebsweise entspricht ebenfalls der des zweiten Ausführungsbeispiels.

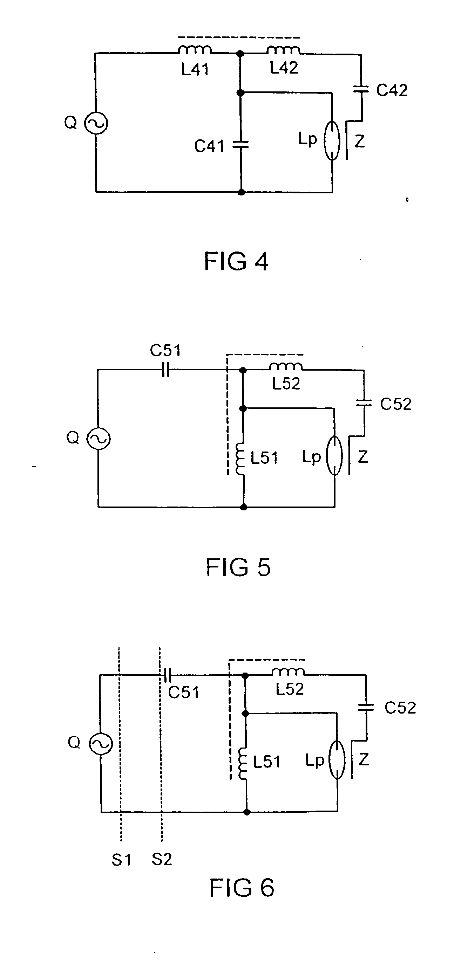

Das in Figur 4 dargestellte vierte Ausführungsbeispiel der Zündvorrichtung unterscheidet sich von dem ersten Ausführungsbeispiel nur durch den zusätzlichen Gleichspannungstrennungskondensator C42, der zwischen dem Hochspannungsausgang des Sekundärwicklungsabschnitts L42 und der Zündhilfselektrode Z der Hochdruckentladungslampe Lp geschaltet ist. Der Primärwicklungsabschnitt L41 des Spartransformators L41, L42 und der Kondensator C41 bilden einen Serienresonanzkreis, der an die Wechselspannungsquelle Q angeschlossen ist. Der Resonanzkondensator C41 ist parallel zur Entladungsstrecke der Hochdruckentladungslampe Lp geschaltet. Der Mittenabgriff zwischen dem Primär- L41 und dem Sekundärwicklungsabschnitt L42 ist an den Kondensator C41 und an die erste Elektrode der Hochdruckentladungslampe Lp angeschlossen. Der andere Anschluss des Sekundärwicklungsabschnitts L42 ist über den Kondensator C42 an die Zündhilfselektrode Z angeschlossen. Die zweite Elektrode der Lampe Lp ist an den Kondensator C41 und an die Wechselspannungsquelle Q angeschlossen. Der Kondensator C42 verhindert einen Gleichstromfluss zwischen der Zündhilfselektrode und der ersten sowie zweiten Elektrode der Hochdruckentladungslampe Lp. Die Kapazität des Kondensators C42 kann in weiten Grenzen frei gewählt werden, ohne einen nennenswerten Einfluss auf den Zündvorgang auszuüben. Vorzugsweise wird der Kondensator C42 so dimensioniert, dass der Spannungsabfall am Kondensator C42 während des Zündvorgangs kleiner als die sich zwischen der Zündhilfselektrode Z und den beiden Elektroden der Hochdruckentladungslampe Lp einstellenden Spannungen ist. Es genügen daher sehr kleine Kapazitätswerte für den Kondensator C42, beispielsweise 33 pF. Aber auch deutlich größere Werte für die Kapazität des Kondensators C42 wie etwa 10 nF sind möglich. Im übrigen entspricht die Betriebsweise dieses Ausführungsbeispiels der des ersten Ausführungsbeispiels.

Das in Figur 5 dargestellte fünfte Ausführungsbeispiel entspricht im wesentlichen dem in Figur 2 abgebildeten zweiten Ausführungsbeispiel . Es unterscheidet sich vom zweiten Ausführungsbeispiel nur durch den zusätzlichen Gleichspannungstrennungskondensator C52, der zwischen der Zünclhilfselektrode Z und dem Hochspannungsanschluss des Sekundärwicklungsabschnitts L52 geschaltet ist. Der Kondensator C5 1 und der Primärwicklungsabschnitt L5 1 des Spartransformators L51, L52 bilden einen Serienresonanzkreis, der an die Wechselspannungsquelle Q angeschlossen ist. Der Primärwicklungsabschnitt L51 ist parallel zur Entladungsstrecke der Hochdruckentladungslampe Lp geschaltet. Die Anordnung und Dimensionierung der Bauteile L51, L52, C51, Q, Lp und Z entspricht der Anordnung und Dimensionierung der Bauteile L21, L22, C2, Q, Lp und Z des zweiten Ausführungsbeispiels (Figur 2) . Die Betriebsweise entspricht ebenfalls der des zweiten Ausführungsbeispiels .

In Figur 6 ist die räumliche Aufteilung der Komponenten der Zündvorrichtung gemäß dem fünften Ausführungsbeispiel (Figur 5) schematisch dargestellt. Die Komponenten C51, L51, L52 und C52 der Zündvorrichtung sind im Lampensockel der Hochdruckentladungslampe Lp untergebracht. Die elektrischen Anschlüsse S2 der Hochdruckentladungslampe Lp bzw. der Zündvorrichtung sind mittels Kabel mit den elektrischen Anschlüssen S1 der Wechselspannungsquelle Q verbunden.

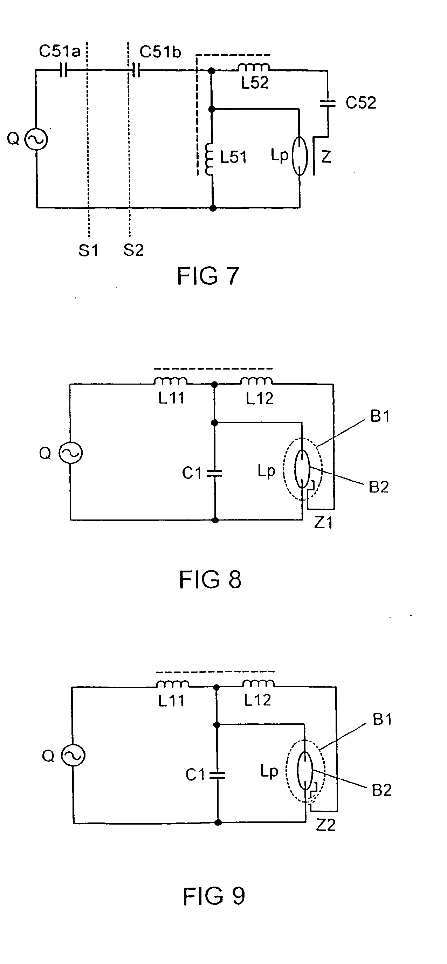

In Figur 7 ist eine alternative räumliche Aufteilung der Resonanzkapazität des Serienresonanzkreises der Zündvorrichtung schematisch dargestellt. Die Resonanzkapazität besteht hier aus den beiden in Serie geschalteten Kondensatoren C51a und C51b. Die Kondensatoren C51a, C51b und der Primärwicklungsabschnitt L51 des Spartransformators L51, L52 bilden hier einen Serienresonanzkreis, der an die Wechselspannungsquelle Q angeschlossen ist. Die Kondensatoren C51a, C51 b ersetzen hier den Kondensator C51 gemäß dem in den Figuren 5 und 6 dargestellten fünften Ausführungsbeispiel. Der Kondensator C51a ist als Bestandteil der Wechselspannungsquelle bzw. des Vorschaltgerätes Q der Lampe Lp ausgebildet, während der Kondensator C51b als Bestandteil der Zündvorrichtung ausgebildet zusammen mit den anderen Komponenten der Zündvorrichtung in dem Lampensockel der Lampe Lp untergebracht ist. In allen anderen Details entspricht das in Figur 7 dargestellte Ausführungsbeispiel dem in den Figuren 5 und 6 abgebildeten fünften Ausführungsbeispiel. Für identische Bauteile wurden daher in den Figuren 5, 6 und 7 dieselben Bezugszeichen verwendet.

In den Figuren 8 und 9 ist wieder die Zündvorrichtung gemäß dem ersten Ausführungsbeispiel und mit der Hochdruckentladungslampe Lp dargestellt. Die Lampe Lp ist hier allerdings mit unterschiedlich ausgeführten Zündhilfselektroden Z1, bzw. Z2 versehen. Daher wurden in den Figuren 1, 8 und 9 für identische Bauteile dieselben Bezugszeichen verwendet.

Bei der in Figur 8 schematisch dargestellten Hochdruckentladungslampe Lp ist die Zündhilfselektrode Z1 als Draht ausgebildet, der in den Innenraum des Außenkolbens B 1 hineinragt und an der Außenseite des Entladungsgelaßes B2 anliegt. Der Zündhilfsdraht Z1 ist kapazitiv an eine der Elektroden der innerhalb des Entladungsgefäßes B2 der Hochdruckentladungslampe Lp angeordneten gekoppelt und über eine Dichtung, beispielsweise eine Quetschdichtung, aus dem Außcnkolben B 1 herausgeführt und mit dem Hochspannungsanschluss des Sekundärwicklungsabschnitts L 12 kontaktiert.

Bei der in Figur 9 schematisch dargestellten Hochdruckentladungslampe Lp besteht die Zündhilfselektrode Z1 im wesentlichen aus einem Federblech, das im Innenraum des Außenkolbens B1 angeordnet und kapazitiv an eine der innerhalb des Entladungsgefäßes B2 angeordnete Elektrode gekoppelt ist. Das Federblech ist mit einer metallischen Schicht auf der Innenseite des Außenkolbens B2 kontaktiert, die wiederum kapazitiv an eine zweite Beschichtung auf der Außenseite des Außenkolbens B1 gekoppelt ist. Die beiden metallischen Beschichtungen auf der Innen- und Außenseite des Außenkolbens B1 liegen einander gegenüber und bilden einen Kondensator, bei dem das Material bzw. Glas des Außenkolbens das Dielektrikum bildet. Dieser Kondensator entspricht dem Gleichspannungstrennungskondensator C52. Die metallische Beschichtung auf der Außenseite des Außenkolbens B1 ist mit dem Hochspannungsanschluss des Sekundärwicklungsabschnitts L12 verbunden.

## Patentansprüche

1. Verfahren zum Betreiben einer Hochdruckentladungslampe mit Wechselspannungen mit Frequenzen ein Megahertzbereich, wobei mit Hilfe der Primärwicklung (L11) eines Transformators, die als Bestandteil eines Serienresonanzkreises ausgebildet ist, eine resonanzüberhöhte Wechselspannung zum Zünden der Gasentladung in dem Entladungsgefäß der Hochdruckentladungslampe bereitgestellt wird, und wobei die resonanzüberhöhte Wechselspannung mit Hilfe einer Sekundärwicklung des Transformators (L11, L12) in eine höhere Spannung transformiert wird, die einer Zündhilfselektrode (Z) der Hochdruckentladungslampe (Lp) zugeführt wird,
**dadurch gekennzeichnet, dass** nach erfolgter Zündung der Gasentladung in der Hochdruckentladungslampe beim Betrieb der Hochdruckentladungslampe mit Wechselspannungen mit Frequenzen im Megahertzbereich eine in Serie zur Entladungsstrecke der Hochdruckentladungslampe geschaltete Impedanz des Serienresonanzkreises zur Stabilisierung der Gasentladung verwendet wird.

2. Verfahren nach Anspruch 1, **dadurch gekennzeichnet, dass** die gewünschte elektrische Leistungsaufnahme der Hochdruckentladungslampe durch Änderung der Frequenz ihrer Versorgungsspannung eingestellt wird.

3. Verfahren nach Anspruch 1, **dadurch gekennzeichnet, dass** zum Bereitstellen der resonanzüberhöhten Wechselspannung eine Frequenzmodulation der von einer Spannungsquelle generierten Versorgungsspannung durchgeführt wird.

## Claims

1. Method for operating a high-pressure discharge lamp with AC voltages at frequencies in the megahertz range, a resonant peak of the AC voltage being provided for the purpose of starting the gas discharge in the discharge vessel of the high-pressure discharge lamp with the aid of the primary winding (Lll) of a transformer, said primary winding (Lll) being formed as part of a series resonant circuit and the resonant peak of the AC voltage being transformed with the aid of a secondary winding of the transformer (Lll, L12) into a higher voltage which is supplied to an auxiliary starting electrode (Z) of the high-pressure discharge lamp (Lp), **characterized in that**, once the gas discharge in the high-pressure discharge lamp has been started, an impedance, which is connected in series with the discharge path of the high-pressure discharge lamp, of the series resonant circuit is used for the purpose of stabilizing the gas discharge during operation of the high-pressure discharge lamp with AC voltages at frequencies in the megahertz range.

2. Method according to Claim 1, **characterized in that** the desired electrical power consumption of the high-pressure discharge lamp is set by altering the frequency of its supply voltage.

3. Method according to Claim 1, **characterized in that** frequency modulation of the supply voltage generated by a voltage source is carried out for the purpose of providing the resonant peak of the AC voltage.

## Revendications

1. Procédé pour faire fonctionner une lampe à décharge à haute pression avec des tensions alternatives ayant des fréquences de l'ordre du mégahertz, dans lequel on met à disposition, à l'aide de l'enroulement (L11) primaire d'un transformateur qui est constitué en constituant d'un circuit de résonance série, une tension alternative amplifiée par résonance pour l'amorçage de la décharge dans un gaz dans l'enceinte de décharge de la lampe à décharge à haute pression et dans lequel on transforme la tension alternative amplifiée par résonance à l'aide d'un enroulement secondaire du transformateur (L11, L12) en une tension plus haute qui est appliquée à une électrode (Z) auxiliaire d'amorçage de la lampe (Lp) à décharge à haute pression,
**caractérisé en ce que**, après que l'amorçage de la décharge dans un gaz dans la lampe à décharge à haute pression a été effectué lorsque la lampe à décharge à haute pression fonctionne avec des tensions alternatives ayant des fréquences de l'ordre du mégahertz, on utilise pour la stabilisation de la décharge dans un gaz une impédance du circuit de résonance série, montée en série avec la section de décharge de la lampe à décharge à haute pression.

2. Procédé suivant la revendication 1, **caractérisé en ce que** l'on règle la puissance électrique absorbée souhaitée de la lampe à décharge à haute pression en modifiant la fréquence de sa tension d'alimentation.

3. Procédé suivant la revendication 1, **caractérisé en ce que**, pour mettre à disposition la tension alternative amplifiée par résonance, on effectue une modulation de fréquence de la tension d'alimentation produite par une source de tension.
